Europäisches Patentamt

European Patent Office

Office européen des brevets

(19)

(11)    EP 0 923 410 B1

(12)    **FASCICULE DE BREVET EUROPEEN**

(45) Date de publication et mention
de la délivrance du brevet:
**13.06.2001  Bulletin 2001/24**

(21) Numéro de dépôt: **97920680.2**

(22) Date de dépôt: **14.04.1997**

(51) Int Cl.7: **B01D 49/00**

(86) Numéro de dépôt international:
**PCT/EP97/01867**

(87) Numéro de publication internationale:
**WO 97/40921 (06.11.1997 Gazette 1997/47)**

(54) **PROCEDE ET DISPOSITIF D'AGGLOMERATION DE PARTICULES DANS UN ECOULEMENT GAZEUX**

VERFAHREN UND VORRICHTUNG ZUR AGGLOMERIERUNG VON PARTIKELN IN EINEM GASSTROM

METHOD AND DEVICE FOR THE AGGLOMERATION OF PARTICLES IN A GASEOUS FLOW

(84) Etats contractants désignés:
**AT BE CH DE DK ES FI FR GB GR IE IT LI LU MC NL PT SE**

(30) Priorité: **29.04.1996  LU 88751**

(43) Date de publication de la demande:
**23.06.1999  Bulletin 1999/25**

(73) Titulaire: **COMMUNAUTE EUROPEENNE DE L'ENERGIE ATOMIQUE (EURATOM)
L-2920 Luxembourg (LU)**

(72) Inventeurs:
• **CAPERAN, Philippe**
  **F-38420 Saint Jean le Vieux (FR)**
• **SOMERS, Joseph**
  **D-76137 Karlsruhe (DE)**
• **RICHTER, Karl**
  **D-76185 Karlsruhe (DE)**

(74) Mandataire: **Weinmiller, Jürgen
SPOTT & WEINMILLER,
Patentanwälte,
Lennéstrasse 9
82340 Feldafing (DE)**

(56) Documents cités:
FR-A- 910 116          US-A- 2 535 679
US-A- 4 378 976

EP 0 923 410 B1

## Description

L'invention se réfère à un procédé et à un dispositif d'agglomération de particules dans un écoulement gazeux traversant une chambre acoustique d'agglomération.

Les particules solides ou liquides produites au cours de divers procédés industriels et emmenées vers l'extérieur par un écoulement gazeux sont une source de pollution pour la nature et peuvent être un facteur de risque pour l'homme. En particulier, l'augmentation de la concentration de particules submicroniques dans l'atmosphère semble la cause d'une augmentation de morbidité humaine. L'invention a donc pour but de concevoir un procédé et un dispositif pour réduire notamment le taux de particules submicroniques dans un écoulement gazeux avant que celui-ci ne soit rejeté dans l'atmosphère.

On connaît des filtres d'affluents gazeux qui mettent en oeuvre soit des champs électrostatiques, soit des procédés mécaniques (séparateur du type cyclone ou venturi) qui sont très complexes et n'assurent qu'une efficacité limitée de purification, notamment en ce qui concerne les particules submicroniques. Le document WO 92/09 354 décrit une chambre acoustique qui assure une agglomération de particules fines de sorte que les particules agglomérées puissent ensuite être captées par des dispositifs classiques conçus pour des particules plus grosses. Pour être efficace, le temps de transfert des particules à travers cette chambre acoustique doit être relativement long, ce qui impose un dimensionnement important de cette chambre et en conséquence une énergie acoustique très élevée.

Par le document US-A-2 535 679 on connaît en outre une méthode d'agglomération de particules d'un aérosol dans une chambre acoustique selon laquelle on reboucle une partie du flux de sortie de la chambre acoustique vers son entrée pour augmenter la probabilité de collisions entre des particules de l'aérosol.

Un rebouclage similaire est également proposé par le document US-A-4 378 976, mais on sélectionne dans ce cas pour le rebouclage un flux filtré qui ne contient pratiquement plus de particules agglomérées.

L'invention a pour but de proposer un procédé et un dispositif dont le rendement d'agglomération est amélioré et dont la taille est réduite.

Ce but est atteint par le procédé tel que défini dans la revendication 1 ainsi que par le dispositif selon la revendication 4.

En ce qui concerne les réalisations préférées de ce procédé ou de ce dispositif, référence est faite aux revendications secondaires.

L'invention sera décrite ci-après plus en détail à l'aide d'un exemple de réalisation et des dessins annexés.

La figure 1 représente le schéma de principe du dispositif.

Les figures 2 et 3 montrent deux réalisations possibles d'un organe de prélèvement dans le dispositif selon la figure 1.

Dans tout problème de séparation de particules, il s'agit de vaincre les forces visqueuses qui font que les particules, lorsqu'elles sont suffisamment petites, suivent quasiment les mouvements du gaz qui les entoure. Différentes forces, soit mécaniques, soit électriques, soit magnétiques etc., peuvent être utilisées pour vaincre ces forces visqueuses et séparer les particules du gaz.

Dans l'agglomération acoustique d'un aérosol, ce sont des effets inertiels qui sont utilisés, les particules étant différemment entraînées dans le mouvement oscillatoire du gaz. Cela favorise des collisions entre elles par effet inertiel.

Dans ce qui suit, on raisonnera en terme de diamètre aérodynamique, ce qui correspond pour une particule quelconque (flocon de suie, aggrégat ouvert de particule, grain de sable, gouttelettes, etc...) au diamètre qu'aurait une gouttelette d'eau sédimentant à la même vitesse que la particule considérée. Ce diamètre est bien souvent différent des tailles géométriques des particules considérées, mais il permet de comparer les propriétés inertielles de particules de nature différente.

Le diamètre $d_f$ auquel une onde acoustique aura le plus d'effet sur un aérosol composé de particules de diamètres aérodynamiques différents est donné par $d_f = \sqrt{9\mu/\rho\pi f}$ (où $\mu$ est la viscosité dynamique du gaz, $\rho$ la densité de l'eau et $f$ la fréquence acoustique en unités du système international). Grâce à des essais expérimentaux, il a été trouvé que les particules ayant un diamètre aérodynamique inférieur à 1,5 $d_f$ (ci-après appelées "petites" particules) s'agglomèrent entre elles. En outre, l'agglomération des petites particules est accélérée par la présence dans l'aérosol traité de particules de diamètre aérodynamique supérieur à 1,5 $d_f$ (ci-après appelées "grosses" particules) sur lesquelles les petites particules s'aggrègent.

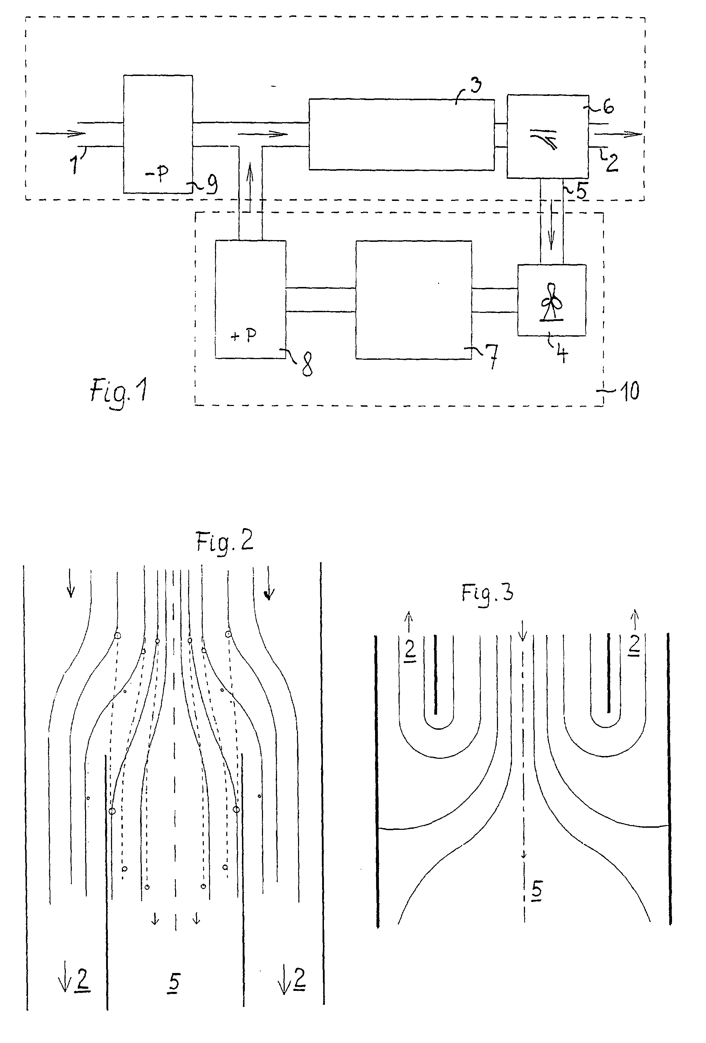

En se référant à la figure 1, qui représente schématiquement le dispositif selon l'invention, on voit une entrée 1, par laquelle arrive l'écoulement gazeux contenant les particules, et une sortie 2, par laquelle l'écoulement quitte le dispositif après avoir été traité. L'élément essentiel en vue de l'agglomération est la chambre 3, qui peut être analogue à celle du document cité WO 92/09 354. A cette chambre, on associe selon l'invention une boucle de retour 10, qui relie la sortie 2 à l'entrée 1 et qui contient un ventilateur 4 permettant d'extraire une partie de l'écoulement principal à la sortie 2 et de la réinjecter en amont de la chambre 3 dans l'écoulement principal. Une telle réinjection facilite le démarrage de l'agglomération par une augmentation du nombre initial de grosses particules par unité de volume, selon l'effet décrit plus haut. Ce bouclage assure donc un effet similaire à une chambre d'agglomération notablement plus longue, c'est-à-dire à temps de transfert élevé, ou une injection de particules de démarrage (seed particles) d'une nature différente.

La boucle de retour 10 est couplée à la sortie 2 en aval de la chambre d'agglomération à travers un organe de prélèvement qui, de préférence, agit comme un séparateur favorisant l'extraction de grosses particules (d > d$_f$). Cela peut être atteint soit par un cyclone permettant la collecte de grosses particules dans un écoulement de gaz (de faible débit) en vue de leur réinjection, soit par un impacteur virtuel tel qu'il est représenté sur la figure 2 ou la figure 3.

Selon la figure 2, la bouche de collecte 5 menant vers le ventilateur 4 est située au centre de la conduite principale menant à la sortie 2. Le ventilateur 4 assure une vitesse de fluide dans la boucle de retour qui, au niveau de la bouche 5, est inférieure à celle de la conduite principale. Par conséquent, les lignes de courant de gaz (courbe en traits pleins) s'incurvent à l'approche de la bouche 5. Les plus grosses particules, par contre, tendent à poursuivre leur droit chemin du fait de leur inertie (courbe en lignes interrompues), ce qui donne une certaine prépondérance de grosses particules dans la bouche de collecte 5 par rapport au flux gazeux continuant vers la sortie.

Une autre possibilité de réalisation du séparateur 6 de la figure 1 est représentée sur la figure 3. Cet impacteur virtuel se distingue du précédent par le fait que l'écoulement principal entre la chambre d'agglomération 3 et la sortie 2 change de direction, les lignes de courant ayant une forme de U.

Selon une première réalisation de l'invention, la boucle de retour sert simplement à réinjecter à l'entrée de la chambre d'agglomération des grosses particules déjà formées et sélectionnées à propos, car l'effet d'agglomération est plus important entre des particules de diamètres aérodynamiques différents qu'entre des particules de diamètre aérodynamique similaire.

On peut profiter de la boucle de retour pour une agglomération supplémentaire de particules, par exemple dans une chambre acoustique supplémentaire 7 en aval du ventilateur 4. Cette chambre peut être munie de ses propres sources acoustiques ou bien être couplée acoustiquement à la chambre d'agglomération en choisissant convenablement l'impédance acoustique de la boucle de retour.

Selon encore une autre réalisation de l'invention, on prévoit un chargeur électrique 8 d'une polarité donnée à la sortie de la boucle de retour, et un chargeur 9 de polarité opposée à l'entrée 1 de l'écoulement principal. Ces chargeurs peuvent par exemple être des électrodes portées à un potentiel positif ou négatif très élevé par rapport aux parois de la conduite (mise à la terre) qui créent un effet corona. Les particules ainsi chargées positivement ou négativement ont tendance à se rapprocher après l'injection de l'écoulement provenant de la boucle de retour dans l'écoulement principal. Eventuellement, un seul chargeur suffit dans la boucle de retour, si l'écoulement principal amène les particules déjà chargées vers la chambre d'agglomération.

Des essais ont montrés que le taux d'agglomération de petites particules de TiO$_2$ est doublé (de 0,01 à 0,02 s$^{-1}$) lorsque la densité de grosses particules passe de 1000 à 5000 cm$^{-3}$, ce qui montre que sans la boucle de retour selon l'invention, l'agglomération recherchée pour un écoulement n'ayant que de petites particules reste insuffisante ou bien exige un temps de transfert dans la chambre d'agglomération qui est prohibitif en ce qui concerne la taille de cette chambre.

L'invention peut être réalisée en amont d'un filtre classique captant notamment de grosses particules.

## Revendications

1. Procédé d'agglomération de particules dans un écoulement gazeux traversant une chambre acoustique d'agglomération (3), caractérisé en ce qu'on prélève de façon sélective, en préférant des particules plus grosses, une partie de l'écoulement à la sortie de ladite chambre et on la réinjecte à l'entrée de la chambre.

2. Procédé selon la revendication 1, caractérisé en ce que la partie de l'écoulement prélevée subit un traitement acoustique supplémentaire d'agglomération avant d'être réinjectée à l'entrée de la chambre.

3. Procédé selon l'une des revendications précédentes, caractérisé en ce qu'on charge électriquement selon une polarité les particules dans l'écoulement gazeux à traiter et qu'on charge électriquement selon la polarité opposée les particules contenues dans la partie prélevée de l'écoulement avant sa réinjection dans la chambre.

4. Dispositif pour la mise en oeuvre du procédé d'agglomération de particules dans un écoulement gazeux traversant une chambre acoustique d'agglomération selon l'une des revendications précédentes, caractérisé en ce qu'on prévoit une boucle de retour (10) qui contient entre la sortie de la chambre (3) et son entrée un séparateur (6) dont la sortie prévue pour le prélèvement préféré des particules plus grosses est reliée à un ventilateur (4) permettant, par la boucle de retour, la réinjection de l'écoulement ainsi prélevé dans la chambre (3).

5. Dispositif selon la revendication 4, caractérisé en ce que la boucle de retour contient en outre des moyens (7) de traitement acoustique en vue d'une agglomération de particules traversant la boucle.

6. Dispositif selon la revendication 4 ou 5, caractérisé en ce que la boucle de retour est accouplée acoustiquement à la chambre acoustique.

7. Dispositif selon l'une des revendications 4 à 6, caractérisé en ce que des chargeurs électriques (8, 9) sont prévus à la sortie de la boucle de retour et/ou à l'entrée (1) du dispositif en vue d'une charge des particules à des polarités différentes.

**Claims**

1. A method for agglomerating particles in a gaseous flow through an acoustical agglomeration chamber (3), characterized in that a portion of the flow at the outlet of the chamber is selectively extracted by preferring larger particles, and is re-injected into the inlet of the chamber.

2. A method according to claim 1, characterized in that the extracted flow portion is submitted to an additional acoustical agglomeration processing prior to being re-injected to the chamber inlet.

3. A method according to any one of the preceding claims, characterized in that the particles in the gaseous flow to be processed are electrically charged according to one polarity and the particles in the extracted flow portion are charged according to the opposite polarity prior to being re-injected into the chamber.

4. A device for implementing the method for agglomerating particles in a gaseous flow through an acoustical agglomeration chamber according to any one of the preceding claims, characterized in that a feedback-loop (10) is provided which contains between the outlet and the inlet of the chamber (3) a separator (6) whose outlet for extracting preferably larger particles is connected to a fan (4) allowing to reinject the thus extracted flow via the feedback loop into the chamber (3).

5. A device according to claim 4, characterized in that the feedback loop further contains means (7) allowing an acoustical processing in view of an agglomeration of particles in said loop.

6. A device according to claim 4 or 5, characterized in that the feedback loop is acoustically coupled to the acoustical chamber.

7. A device according to one of the claims 4 to 6, characterized in that electrical chargers (8, 9) are provided at the outlet of the feedback loop and/or at the inlet (1) of the device in order to charge the particles to different polarities.

**Patentansprüche**

1. Verfahren zum Agglomerieren von Partikeln in einem Gasstrom, der eine akustische Agglomerationskammer (3) durchströmt, dadurch gekennzeichnet, daß man selektiv unter Bevorzugung größerer Partikel einen Teil der Strömung am Auslaß der Kammer entnimmt und an den Einlaß der Kammer zurückspeist.

2. Verfahren nach Anspruch 1, dadurch gekennzeichnet, daß der entnommene Teil der Strömung einer zusätzlichen akustischen Agglomerierung vor der Wiedereinspeisung am Einlaß der Kammer unterworfen wird.

3. Verfahren nach einem der vorstehenden Ansprüche, dadurch gekennzeichnet, daß man die Partikel in der zu bearbeitenden Gasströmung gemäß einer Polarität elektrisch auflädt und die in der aus der Strömung entnommenen Teilströmung enthaltenen Partikel vor der Wiedereinspeisung in die Kammer gemäß der entgegengesetzten Polarität auflädt.

4. Vorrichtung zur Durchführung des Verfahrens zur Agglomerierung von Partikeln in einer Gasströmung, die eine akustische Agglomerationskammer durchströmt, gemäß einem der vorstehenden Ansprüche, dadurch gekennzeichnet, daß man eine Rückkopplungsschleife (10) vorsieht, die zwischen dem Auslaß (3) der Kammer und deren Einlaß einen Separator (6) enthält, dessen für die bevorzugte Entnahme von größeren Partikeln vorgesehener Ausgang an einen Ventilator (4) angeschlossen ist, der die Wiedereinspeisung der so entnommenen Strömung über die Rückkopplungsschleife in die Kammer (3) ermöglicht.

5. Vorrichtung nach Anspruch 4, dadurch gekennzeichnet, daß die Rückkopplungsschleife außerdem Mittel (7) zur akustischen Bearbeitung in Hinblick auf eine Agglomerierung von die Rückkopplungsschleife durchströmenden Partikeln enthält.

6. Vorrichtung nach Anspruch 4 oder 5, dadurch gekennzeichnet, daß die Rückkopplungsschleife akustisch mit der akustischen Kammer gekoppelt ist.

7. Vorrichtung nach einem der Ansprüche 4 bis 6, dadurch gekennzeichnet, daß elektrische Ladeorgane (8, 9) am Ausgang der Rückkopplungsschleife und/oder am Einlaß (1) der Vorrichtung vorgesehen sind, um die Partikel auf unterschiedliche Polaritäten aufzuladen.

Fig. 1

Fig. 2

Fig. 3